(19) Europäisches Patentamt
European Patent Office
Office européen des brevets

(11) **EP 2 516 350 B1**

(12) **FASCICULE DE BREVET EUROPEEN**

(45) Date de publication et mention de la délivrance du brevet:
**21.02.2018 Bulletin 2018/08**

(21) Numéro de dépôt: **10813134.3**

(22) Date de dépôt: **23.12.2010**

(51) Int Cl.:
**C04B 35/101** (2006.01)     **C04B 35/626** (2006.01)
**C22B 1/243** (2006.01)     **F27D 1/00** (2006.01)
**C04B 35/106** (2006.01)

(86) Numéro de dépôt international:
**PCT/IB2010/056063**

(87) Numéro de publication internationale:
**WO 2011/077411 (30.06.2011 Gazette 2011/26)**

(54) **POUDRE POUR PISÉ SEC**

PULVERMASSE FÜR TROCKENSTAMPFEN

POWDER MIX FOR DRY RAMMING

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **24.12.2009 FR 0959580**

(43) Date de publication de la demande:
**31.10.2012 Bulletin 2012/44**

(73) Titulaire: **Saint-Gobain Centre de Recherches et
d'Etudes
Européen
92400 Courbevoie (FR)**

(72) Inventeurs:
• **JORGE, Eric
F-84210 Les Valayans (FR)**
• **FRANCY, Olivier
F-84800 L'isle sur La Sorgue (FR)**

(74) Mandataire: **Nony
11 rue Saint-Georges
75009 Paris (FR)**

(56) Documents cités:
**DE-A1- 4 041 061     US-A- 4 430 440
US-A- 6 121 177**

• **TIM KRATSCHMER ET AL: "Improved Thermal
Shock Performance of Sintered Mg-Partially
Stabilized Zirconia with Alumina and Titania
Additions.", INT. J. APPL. CERAM. TECHNOL.,
vol. II, no. II, 1 janvier 2009 (2009-01-01), pages
1-13, XP002585446, Freiberg (DE)**

Remarques:
Le dossier contient des informations techniques
présentées postérieurement au dépôt de la demande
et ne figurant pas dans le présent fascicule.

**Description**

**Domaine technique**

L'invention se rapporte à une poudre du type pisé sec ou « DVC », en anglais « dry vibratable mix » ou « dry refractory », notamment destinée à la fabrication de revêtement de fours, par exemple de fours à induction, en particulier pour la fusion de métaux.

L'invention se rapporte également à un produit consolidé obtenu à partir d'une poudre selon l'invention et à un procédé de fabrication d'un tel produit.

**Etat de la technique**

Un revêtement d'un four pour la fusion de métaux doit notamment présenter :

- une bonne résistance à la fissuration ;
- une bonne résistance à l'infiltration par le métal fondu ; et
- une bonne résistance aux chocs thermiques.

A cet effet, on utilise des produits obtenus par traitement thermique de consolidation de poudres du type DVC, telles que décrites par exemple dans EP 1 224 153.

Une poudre du type DVC est une poudre qui, à la différence d'un béton, peut être mise en oeuvre «à sec», c'est-à-dire sans ajout d'eau ou de liant liquide, ou, rarement, avec une quantité très réduite d'eau ou de liant liquide (typiquement inférieure à 3 %), à la différence d'un béton. C'est pourquoi, contrairement à un béton, une poudre du type DVC ne comporte classiquement aucun liant apte à prendre en masse par ajout d'eau. Les éventuels enseignements qui pourraient être tirés de l'étude de documents portant sur des bétons ne sont donc pas, *a priori*, transposables à ce type de poudres.

La mise en forme d'une poudre du type DVC résulte classiquement d'une simple compaction à température ambiante, la consolidation résultant d'un traitement thermique de consolidation ultérieur.

Classiquement également, une poudre du type DVC est constituée de particules réfractaires et de particules d'un liant activable à chaud. La température de traitement thermique de consolidation est comprise entre la température de fusion du liant activable à chaud et celle des particules réfractaires. Pendant le traitement thermiques de consolidation, le liant activable à chaud peut ainsi passer de l'état solide à un état liquide visqueux permettant une adhésion aux particules réfractaires et une liaison entre ces dernières. Le changement depuis l'état solide vers cet état liquide visqueux est appelé « activation » du liant.

Le liant activable à chaud est également choisi de manière à pouvoir se présenter sous cet état liquide visqueux à une température proche de la température de service du four, en particulier lors de la première montée en température. Cet état liquide visqueux permet ainsi avantageusement de réduire la rigidité du produit consolidé, facilitant sa déformation et augmentant ainsi sa capacité d'adaptation à des contraintes thermomécaniques locales. Lors des montées en température suivantes, cet état liquide peut être modifié, et notamment devenir rigide par un enrichissement en particules fines.

L'article « *Spinel formation in coreless induction furnace linings* », Saikia et Al, Proceedings of the 4th International Symposium on Advances in Refractories for the Metallurgical Industries, p 827-840 (2004) décrit des poudres du type DVC à base d'alumine et/ou de spinelle $MgAl_2O_4$. Les produits frittés obtenus à partir de ces poudres présentent une bonne résistance à la corrosion par les métaux en fusion. Ils présentent cependant une résistance limitée aux chocs thermiques, notamment dans le cas de la fusion d'alliages légers ou d'alliages d'aluminium, à l'origine de chocs thermiques sévères. Or les chocs thermiques créent des fissures à l'origine de phénomènes préjudiciables d'infiltration par les métaux en fusion.

JP 3 183 656 décrit des poudres du type DVC à base de silice cristallisée. Les produits frittés obtenus à partir de ces poudres présentent l'avantage d'une bonne résistance aux chocs thermiques, notamment lors des montées et descentes en température répétitives. Cependant, ces produits frittés présentent une résistance à la corrosion et à l'infiltration par les métaux en fusion limitée. Ils posent également des problèmes d'hygiène lors de leur mise en place, notamment du fait de la présence potentielle de poussières de silice cristallines.

US 4,430,440 décrit un matériau pour coulisse de tête magnétique comprenant un mélange de poudres consistant en 40 % à 80 % en masse de $Al_2O_3$ et en 20 % à 60 % en masse de $TiO_2$, et contient en outre, pour 100 parts en masse de mélange de $Al_2O_3$ et de $TiO_2$, 0,5 parts à 5 parts d'au moins un oxyde choisi parmi CaO, MgO et $Y_2O_3$, et 0,5 parts à 10 parts de $ZrO_2$.

Pour améliorer la résistance aux chocs thermiques, il est connu d'ajouter des particules fines de zircone monoclinique ou des grains de mullite-zircone et/ou d'alumine-zircone. L'accident de dilatation thermique de la zircone crée un réseau de microfissures favori sant l'absorption de l'énergie de propagation des fissures. Dans ce but, il est également connu d'ajouter des particules fines de silice.

Il existe un besoin permanent pour une poudre permettant de fabriquer des produits consolidés, notamment frittés, présentant une bonne résistance aux chocs thermiques et une bonne résistance à l'infiltration par les métaux en fusion.

Un but de l'invention est de répondre à ce besoin.

**Résumé de l'invention**

L'invention concerne une poudre comportant plus de 70 %, de préférence plus de 80 %, plus de 90 % de particules réfractaires, une particule de ladite poudre étant classée dans la fraction appelée «matrice» ou dans la fraction appelée «granulat» selon qu'elle présente une taille inférieure ou égale à 100 $\mu$m, ou supérieure à 100 $\mu$m, respectivement, ladite poudre comportant, en pourcentages en masse par rapport à la masse de la poudre :

- plus de 40 % de particules réfractaires, dites « particules ATZ », présentant la composition chimique suivante, en pourcentages massiques sur la base des oxydes desdites particules ATZ:

  - 10 % $\leq Al_2O_3 \leq$ 55 %,
  - 35 % $\leq TiO_2 \leq$ 80 %,
  - 1 % $\leq MgO+Cr_2O_3 \leq$ 10 %,
  - 8 % $\leq ZrO_2 \leq$ 20 %,
  - $SiO_2 \leq$ 8 %,

- de 0,1 % à 18 % de particules d'un liant activable à chaud, présentant une température de fusion inférieure à 1300°C, en particulier un liant inorganique et/ou au moins une résine, dites «particules de liant activable à chaud».

Comme on le verra plus en détail dans la suite de la description, les inventeurs ont découvert qu'une poudre selon l'invention conduit à un produit résistant particulièrement bien aux chocs thermiques et à l'infiltration.

Les inventeurs ont également découvert que ce produit présente avantageusement un coefficient de dilatation réduit, ce qui limite l'apparition de fissures.

Une poudre selon l'invention peut encore comporter une ou plusieurs des caractéristiques optionnelles suivantes :

- De préférence, la matrice représente plus de 10 %, plus de 15 %, de préférence plus de 20 % et/ou moins de 40 %, de préférence moins de 35 % de la masse de la poudre, le complément à 100 % étant, par définition, constitué par le granulat.
- La poudre comporte plus de 45 %, voire plus de 50 % et/ou moins de 80 %, moins de 70 %, voire moins de 65 % de particules ATZ.
- La composition des particules ATZ est telle que

  - la teneur en $Al_2O_3$ est supérieure à 20 %, supérieure à 25 %, supérieure à 30 %, voire supérieure à 35 % et/ou inférieure à 50 %, inférieure à 45 %, inférieure à 40 %; et/ou
  - la teneur en $TiO_2$ est supérieure à 40 % et/ou inférieure à 70 %, inférieure à 65 %, inférieure à 60 %, inférieure à 55 %; et/ou
  - la teneur en $MgO+Cr_2O_3$ est supérieure à 2 % et/ou inférieure à 8 %; et/ou
  - la teneur en $Cr_2O_3$ est inférieure à 0,5 %, inférieure à 0,2 %, voire sensiblement nulle; et/ou
  - la teneur en $ZrO_2$ est supérieure à 10 % et/ou inférieure à 15 % ; et/ou
  - la teneur en $SiO_2$ est inférieure à 5 %, voire inférieure à 2 %, voire sensiblement nulle; et/ou
  - $Fe_2O_3 \leq$ 1 %.

- Dans un mode de réalisation, la teneur en $SiO_2$ dans les particules ATZ est supérieure à 1 %.
- Les particules ATZ comportent une phase oxyde sous la forme d'une solution solide du type titanate d'aluminium comprenant

  - du titane,
  - de l'aluminium,
  - du fer,
  - du magnésium et/ou du chrome et

- du zirconium,

ladite phase oxyde représentant au moins 60 %, de préférence au moins 70 %, ou même au moins 75 % de la masse totale des oxydes des particules ATZ.

- Les particules ATZ comportent une phase silicatée minoritaire comportant de préférence plus de 40 %, voire plus de 50 % de silice, en pourcentage massique sur la base de ladite phase silicatée.
- Les particules ATZ comportent une phase minoritaire comportant de préférence plus de 80 %, voire plus de 90 % d'oxyde de titane $TiO_2$ et/ou d'oxyde de zirconium $ZrO_2$, en pourcentage massique sur la base de ladite phase minoritaire.
- Les particules ATZ sont des particules fondues, c'est-à-dire obtenues par un procédé comportant une fusion d'une charge de départ puis un durcissement par refroidissement de la matière en fusion.
- Les particules ATZ sont des particules conformes à celles décrites et/ou revendiquées dans la demande de brevet français FR 08/54582, incorporée par référence.
- La poudre comporte plus de 10 %, plus de 20 %, voire plus de 30 % et/ou moins de 50 %, voire moins de 40 % de particules présentant une taille supérieure à 1 mm.
- La poudre comporte plus de 10 %, plus de 20 %, voire plus de 30 % et/ou moins de 50 %, voire moins de 40 % de particules présentant une taille comprise entre 0,1 mm et 1 mm.
- La poudre présente les caractéristiques suivantes :

  - la taille maximale des particules est inférieure à 5 mm, et
  - la quantité de particules de taille supérieure à 300 $\mu$m est supérieure à 50 % et inférieure à 70 %, et
  - la quantité de matrice est supérieure à 15 %, de préférence supérieure à 20 %, et inférieure à 40 %, et
  - la quantité de particules de taille inférieure à 75 $\mu$m est supérieure à 10 % et inférieure à 35 %.

- La poudre comporte de préférence plus de 1 %, plus de 2 %, plus de 3 %, plus de 4 %, plus de 5 %, et/ou moins de 15 %, moins de 12 %, moins de 10 %, voire moins de 8 %, voire moins de 6 % de liant activable à chaud.
- Plus de 80 %, plus de 90 %, voire sensiblement 100 % des particules du liant activable à chaud sont dans la matrice, en pourcentage massique sur la base de la masse du liant activable à chaud.
- De préférence, le liant activable à chaud présente une température de fusion supérieure à 5°C, de préférence supérieure à 15°C, de préférence supérieure à 20°C, voire supérieure à 30°C, supérieure à 50°C, supérieure à 70°C, supérieure à 80°C, supérieure à 150°C, et/ou, inférieure à 1300°C, inférieure à 1200°C.
- De préférence, le liant activable à chaud présente une température de fusion comprise entre 150°C et 1200°C.
- De préférence, le liant activable à chaud n'est pas un métal.
- Le liant activable à chaud est sélectionné dans le groupe formé par l'oxyde de bore, l'acide borique, les borates, la cryolithe, les sels de fluorure, les composés de silicate, les composés de phosphate, les feldspaths, les chlorures de magnésium, la colémanite, l'argile, le kaolin, la silice amorphe, en particulier la fumée de silice, les résines, les frittes céramiques, et leurs mélanges. La résine peut être en particulier choisie parmi les résines phénoliques, les résines furaniques, les résines acryliques, les résines de polyester, les résines époxydes, les résines silicones, les résines siloxanes, les résines alkydes, les résines polyvinyliques, et leurs mélanges. Dans un mode de réalisation particulier, la résine est choisie parmi les produits particulaires transformables en un polymère lors du traitement thermique de consolidation.
- De préférence, le liant activable à chaud est sélectionné dans le groupe formé par les borates de sodium, les borates de potassium, les borates de calcium, l'acide borique, l'oxyde de bore, l'argile, les sels de fluorure, et leurs mélanges. De préférence, le liant activable à chaud est sélectionné dans le groupe formé par l'acide borique, l'oxyde de bore, l'argile, les sels de fluorure, et leurs mélanges.
- De préférence, le liant activable à chaud est inorganique.
- La poudre comporte plus de 2 %, plus de 3 %, voire plus de 4 % et/ou moins de 10 %, moins de 8 %, voire moins de 7 % d'argile.
- La poudre comporte plus de 0,5 %, plus de 1 %, et/ou moins de 5 %, moins de 4 %, voire moins de 3 % d'acide borique.
- La poudre comporte plus de 0,1 %, plus de 0,5 % et/ou moins de 5 %, moins de 3 %, voire moins de 2 % de $KBF_4$.
- La poudre contient un agent permettant de réduire, voire de supprimer, les poussières lors de la mise en place de la poudre. Cet « agent anti-poussières » peut être choisi dans le groupe formé par les huiles, en particulier les huiles minérales, le kérosène, les polymères organiques et leurs mélanges. De préférence cet agent est du kérosène. De préférence, la quantité d'agent anti-poussières est comprise entre 0,1 % et 1 %.
- La poudre contient au moins un agent permettant de réduire la mouillabilité aux métaux en fusion de ladite poudre et/ou du produit consolidé obtenu à partir de ladite poudre. De préférence, cet « agent anti-mouillant » est choisi parmi le carbure de silicium, le sulfate de baryum, les SiAlON, les nitrures. De préférence, cet agent est choisi parmi le carbure de silicium et le sulfate de baryum. De préférence encore, l'agent anti-mouillant est le sulfate de baryum.

De préférence, l'agent anti-mouillant est introduit sous la forme de particules présentant une taille inférieure ou égale à 100 $\mu$m. De préférence, la quantité d'agent anti-mouillant est comprise entre 5 % et 15 %, de préférence entre 5 % et 10 %.

- Les particules réfractaires et les particules du liant activable à chaud représentent ensemble plus de 81 %, plus de 85 %, plus de 90 %, plus de 93 %, voire plus de 95 %, voire plus de 98 % de la masse de la poudre.
- La poudre est constituée pour plus de 95 %, voire plus de 98 %, voire sensiblement 100 %, de particules réfractaires, de particules de liant activable à chaud, optionnellement de particules d'agent anti-poussières et optionnellement de particules d'agent anti-mouillant, le complément éventuel à 100 % étant constitué d'impuretés, par exemple de fer provenant d'une étape de broyage.
- Les impuretés représentent moins de 3 %, moins de 2 %, voire moins de 1 %.
- La poudre ne contient pas de liant hydraulique ou de liant organique excepté, éventuellement, une résine. Dans un mode réalisation, la poudre ne contient ni liant hydraulique, ni liant organique. Dans un premier mode réalisation, la poudre ne contient ni liant hydraulique, ni liant organique excepté, éventuellement, une résine. Dans un deuxième mode de réalisation, la poudre ne contient ni liant hydraulique ni liant organique.

Le granulat, dont les particules sont appelées « grains », peut encore comporter une ou plusieurs des caractéristiques optionnelles suivantes :

- La quantité de grains de taille supérieure à 300 $\mu$m est supérieure à 30 %, supérieure à 40 %, voire supérieure à 50 % et/ou inférieure à 70 %.
- Plus de 60 %, plus de 70 %, plus de 75 % des grains du granulat, sont des particules ATZ, en pourcentages sur la base de la masse du granulat. Les particules ATZ du granulat sont désignées par « grains ATZ ».
- La poudre comporte plus de 30 %, voire plus de 40 % ou plus de 50 % et/ou moins de 80 %, moins de 70 %, voire moins de 65 % de grains ATZ.
- La poudre comporte plus de 20 %, voire plus de 25 % ou plus de 30 % et/ou moins de 50 %, moins de 45 %, voire moins de 40 % de grains ATZ présentant une taille supérieure à 1 mm.
- Le granulat comporte, outre les grains ATZ, des grains réfractaires additionnels en un matériau choisi dans le groupe formé par l'alumine, la magnésie, l'oxyde de chrome, la silice, la bauxite, la mullite, la zircone, la zircone partiellement stabilisée, la zircone stabilisée, la mullite-zircome, l'alumine-zircone, le spinelle magnésie-alumine, le zircon, la cordiérite, le titanate d'aluminium, les chamottes argileuses contenant entre 30 et 50 % d'alumine, de préférence entre 35 % et 45 % d'alumine, la wollastonite, les matériaux alumine-zircone-silice (ou « AZS »), les matériaux alumine-zircone-silice-oxyde de chrome (ou « AZS-Cr »), la bauxite, les zircones renforcées par alumine, et leurs mélanges. De préférence, lesdits grains réfractaires additionnels sont en un matériau choisi dans le groupe formé par l'alumine, la mullite, les chamottes argileuses contenant entre 30 et 50 % d'alumine, de préférence entre 35 % et 45 % d'alumine, la bauxite et leurs mélanges. De préférence, les grains réfractaires additionnels sont en un matériau choisi dans le groupe formé de l'alumine, la mullite, et leurs mélanges. De préférence, les grains ATZ et les grains réfractaires additionnels représentent ensemble plus de 80 %, plus de 90 %, voire sensiblement 100 % des grains réfractaires du granulat.
- La taille maximale des grains, et en particulier des grains ATZ, est inférieure ou égale à 10 mm, de préférence inférieure ou égale à 8 mm, de préférence inférieure ou égale à 6 mm, voire inférieure ou égale à 4 mn.
- La taille maximale des grains réfractaires additionnels est inférieure à 5 mm, de préférence inférieure à 4 mm, de préférence inférieure à 2 mm, de préférence inférieure à 1 mm.
- Le granulat comporte moins de 20 %, moins de 10 %, voire moins de 5 %, voire sensiblement pas de particules dudit liant activable à chaud, dites « grains de liant », en pourcentages massiques sur la base de la poudre.

La matrice, dont les particules sont appelées « particules fines », peut encore comporter une ou plusieurs des caractéristiques optionnelles suivantes :

- La quantité de particules fines de taille inférieure à 75 $\mu$m est comprise entre 10 % et 35 %.
- La matrice comporte plus de 1 % et/ou moins de 10 %, moins de 5 %, voire moins de 3 %, de particules ATZ, dites « particules fines ATZ » (en pourcentages massiques sur la base de la poudre). Dans un mode de réalisation, la matrice ne comporte sensiblement pas de particules ATZ.
- La matrice contient, outre les particules fines ATZ, des particules fines réfractaires additionnelles en un matériau réfractaire choisi dans le groupe formé par l'alumine, la magnésie, l'oxyde de chrome, la silice, la bauxite, la mullite, la zircone, la zircone partiellement stabilisée, la zircone stabilisée, la mullite-zircone, l'alumine-zircone, le spinelle magnésie-alumine, le zircon, la cordiérite, le titanate d'aluminium, les chamottes argileuses contenant entre 30 % et 50 % d'alumine, de préférence entre 35 % et 45 % d'alumine, la wollastonite, les matériaux alumine-zircone-silice (ou « AZS »), les matériaux alumine-zircone-silice-oxyde de chrome (ou « AZS-Cr »), la bauxite, les zircones renforcées par alumine et leurs mélanges. De préférence, lesdites particules fines réfractaires additionnelles sont en un matériau réfractaire choisi dans le groupe formé par l'alumine, la mullite, les chamottes argileuses contenant entre 30 % et 50 % d'alumine, de préférence entre 35 % et 45 % d'alumine, la bauxite, et leurs mélanges. De préférence encore, lesdites particules fines réfractaires additionnelles sont en un matériau réfractaire choisi dans le groupe formé de l'alumine, la mullite, et leurs mélanges. De préférence, les particules fines ATZ et les particules fines réfractaires additionnelles représentent ensemble plus de 80 %, plus de 90 %, voire sensiblement 100 % des particules fines réfractaires de la matrice.

- La quantité de particules fines réfractaires additionnelles est supérieure à 5 %, supérieure à 10 %, supérieure à 15 %, et/ou inférieure à 40 %, inférieure à 30 %, voire inférieure à 25 %.
- Plus de 80 %, voire plus de 90 %, voire sensiblement 100 % du liant activable à chaud appartient à la matrice, en pourcentage sur la base de la masse du liant activable à chaud.
- La quantité de particules fines de liant activable à chaud est de préférence supérieure à 1 %, supérieure à 3 %, supérieure à 5 %, et/ou de préférence inférieure à 15 %, de préférence inférieure à 10 %.

L'invention concerne aussi un produit obtenu par traitement thermique de consolidation d'une poudre selon l'invention, en particulier sous la forme d'un bloc ou d'un revêtement.

Le produit comporte de préférence plus de 1 %, plus de 2 %, plus de 3 %, plus de 4 %, plus de 5 %, et/ou moins de 15 %, moins de 12 %, moins de 10 %, voire moins de 8 %, voire moins de 6 % de liant activable à chaud et/ou de produit de transformation dudit liant activable à chaud résultant dudit traitement thermique de consolidation.

L'invention concerne encore un procédé de fabrication d'un produit consolidé selon décrit par la revendication 17. Ce procédé peut être mis en oeuvre pour la fabrication de la paroi latérale et du fond d'un creuset d'un four à induction. La paroi latérale et le fond d'un tel creuset constituent ensemble le « revêtement » du four.

Dans le cas (1), l'eau, voire la phase liquide dans ladite charge de départ, représente de préférence moins de 2 % de la masse de la charge de départ. De préférence encore, et en particulier pour un revêtement de four à induction à creuset, la charge de départ ne comporte pas d'eau, ni de liant temporaire.

Le fond du creuset, ou « sole », est réalisé en versant dans l'enceinte du four la charge de départ, de préférence constituée d'une poudre selon l'invention. La couche ainsi constituée est alors par exemple damée ou vibrée. Après une opération de mise à niveau qui permet également d'éliminer la couche supérieure de la sole plus faiblement densifiée, un moule est provisoirement disposé sur la couche ainsi obtenue.

Pour réaliser la paroi latérale du creuset, on poursuit alors le versement de la charge de départ entre l'enceinte du four et le moule disposé dans ladite enceinte, de préférence jusqu'à ce que la charge de départ ceinture le moule sur toute sa hauteur. Ladite enceinte peut notamment être constituée d'une couche de matériaux d'isolation.

De préférence, la charge de départ est compactée par vibration. La compaction peut être réalisée au fur et à mesure du versement de la charge de départ.

Une montée en température permet ensuite une activation du liant activable à chaud, c'est-à-dire permet aux particules de liant activable à chaud de fondre sous une forme visqueuse, et ainsi d'assurer la cohésion des particules réfractaires.

A l'étape c), le traitement thermique de consolidation est de préférence effectué à une température supérieure à température de service $T_{service}$. La durée du palier à la température maximale atteinte lors du traitement thermique de consolidation est de préférence supérieure à 30 minutes, de préférence supérieure à 1 heure et/ou inférieure à 10 heures, de préférence inférieure à 3 heures.

Le traitement thermiques de consolidation peut être un frittage.

Après refroidissement, le liant activable à chaud forme une phase liante entre les particules réfractaires. On obtient ainsi un produit dit « consolidé », Typiquement, la porosité ouverte d'un tel produit consolidé est comprise entre 10 % et 30 %.

Si la température d'activation n'a pas été atteinte sur toute l'épaisseur de la paroi latérale et du fond du creuset, une partie du creuset, en particulier à proximité de l'inducteur du four, peut ne pas être consolidée.

Après l'étape de traitement thermiques de consolidation, le moule est retiré ou éliminé et le creuset est prêt à servir à la fusion de métal.

Ce procédé de fabrication d'un produit consolidé peut être également mis en oeuvre pour la fabrication de blocs unitaires destinés à être assemblés à d'autres blocs. Il est alors préférable, suivant l'option (2), d'ajouter à la poudre un liant temporaire et/ou de l'eau. On obtient alors un mélange pouvant être versé dans un moule et permettant, après l'étape b), l'obtention d'une préforme présentant, à température ambiante, une tenue, dite « à froid ».

L'invention porte aussi sur un tel mélange.

De préférence, la quantité de liant temporaire dans ce mélange est supérieure à 0,5 % et/ou inférieure à 6 %, et la quantité d'eau est supérieure à 2 % et/ou inférieure à 6 %, voire inférieure à 5 %, en pourcentages en masse par rapport à la masse de la poudre avant addition du liant temporaire et de l'eau.

Les liants temporaires classiquement utilisés pour la fabrication de blocs céramiques frittés peuvent être mis en oeuvre, par exemple la dextrine, un lignosulfonate de calcium, la CMC, ou un PEG.

L'invention concerne aussi l'utilisation d'un produit consolidé selon l'invention dans une application dans laquelle au moins une partie dudit produit consolidé est soumise à une température de service $T_{service}$ inférieure à la température maximale de traitement thermique de consolidation.

L'invention concerne également un four de fusion de métaux comportant au moins une région constituée en un produit consolidé selon l'invention, en particulier une région destinée à être en contact avec un métal en fusion.

Le four peut en particulier être un four de fusion d'aluminium, d'alliages d'aluminium, comme par exemple l'alliage de référence 42200 selon la norme NF EN 1706, d'alliages de magnésium, d'alliages de zinc ou d'alliages de cuivre.

Bien entendu, la nature des grains réfractaires est déterminée de manière que la température de fusion desdits grains soit supérieure à la température à laquelle il est prévu de soumettre ladite région.

L'invention concerne enfin un procédé de fabrication d'un four, en particulier d'un four de fusion de métaux, dans lequel on assemble au moins un bloc en un produit selon l'invention ou dans lequel on fabrique un creuset comportant un produit selon l'invention, en particulier dans une région destinée à entrer en contact avec du métal en fusion.

**Définitions**

- Par « poudre », on entend un mélange particulaire sec.
- On appelle « particules » les éléments solides constitutifs d'une poudre. Les particules de la matrice sont appelées « particules fines » et les particules du granulat sont appelées « grains ».
- La « taille » d'une particule est donnée classiquement par une caractérisation de distribution granulométrique. Un granulomètre laser permet par exemple la mesure des tailles inférieures ou égale à 5 mm.
- Les percentiles ou « centiles » 10 ($D_{10}$), 50 ($D_{50}$), 90 ($D_{90}$) et 99,5 ($D_{99.5}$) d'une poudre sont les tailles de particules correspondant aux pourcentages, en masse, de 10 %, 50 %, 90 % et 99,5 % respectivement, sur la courbe de distribution granulométrique cumulée des particules de la poudre, les tailles de particules étant classées par ordre croissant. Par exemple, 10 %, en masse, des particules de la poudre ont une taille inférieure à $D_{10}$ et 90 % des particules en masse ont une taille supérieure à $D_{10}$. Les percentiles peuvent être déterminés à l'aide d'une distribution granulométrique réalisée à l'aide d'un granulomètre laser.
- On appelle « taille maximale » le percentile 99,5 ($D_{99.5}$) de ladite poudre.
- On appelle « taille médiane » le percentile $D_{50}$, c'est-à-dire la taille divisant les particules en première et deuxième populations égales en masse, ces première et deuxième populations ne comportant que des particules présentant une taille supérieure, ou inférieure respectivement, à la taille médiane.
- Par « impuretés», on entend les constituants inévitables, introduits involontairement et nécessairement avec les matières premières ou résultant de réactions avec ces constituants. Les impuretés ne sont pas des constituants nécessaires, mais seulement tolérés. De préférence la quantité des impuretés est inférieure à 2 %, inférieure à 1 %, inférieure à 0,5 %, voire sensiblement nulle.
- Par « matériau réfractaire », on entend un matériau présentant une température de fusion supérieure à 1500°C. Cette définition est communément employée par l'homme du métier et citée dans « *Matériau réfractaires et céramiques techniques (éléments de céramurgie et de technologie)*», G. Aliprandi, éditions Septima Paris, 1979. Cet ouvrage donne également en pages 297 à 301 des exemples de matériaux réfractaires, notamment oxydes, carbures et nitrures.
- Par « liant activable à chaud», on entend un constituant qui, sous l'effet d'une augmentation de la température, va se liquéfier sous une forme visqueuse adaptée pour agglomérer les particules d'une poudre réfractaire dans laquelle il est mélangé. A titre d'exemples, l'acide borique, le tétrafluoroborate de potassium et la cryolithe fondent à des températures de fusion comprises entre 150 et 300°C, d'environ 530°C et de 1010°C, respectivement, en donnant des phases visqueuses capables d'agglomérer les particules d'une poudre selon l'invention, c'est-à-dire capables de conduire à un produit structuré (autoportant).
- Par « borate », on entend un composé d'oxoanions à base de bore et d'éléments électropositifs. L'oxoanion à base de bore peut être l'oxoanion borate $BO_2^-$, l'oxoanion diborate $B_2O_5^{4-}$, l'oxoanion triborate $B_3O_5^-$, l'oxoanion tétraborate $B_4O_7^{2-}$. Le tétraborate de sodium $Na_2B_4O_7$, le triborate de lithium $LiB_3O_5$, le diborate de magnésium $Mg_2B_2O_5$ sont des exemples de borates. Les borates peuvent également être hydratés, comme par exemple le borax $Na_2B_4O_7.10H_2O$.
- Par « temporaire », on entend « éliminé du produit pendant le traitement thermique de consolidation ».
- Par « $MgO+Cr_2O_3$ », on entend classiquement « MgO et/ou $Cr_2O_3$ ».
- Une phase est dite « minoritaire » lorsqu'une autre phase présentant une teneur massique plus élevée est présente.
- Tous les pourcentages sont exprimés en masse par rapport à la masse de la poudre, sauf indication contraire (en particulier la composition des particules ATZ est exprimée en pourcentages sur la base des oxydes de ces particules).

- Classiquement, les caractéristiques relatives à un état de la matière (température de fusion, viscosité, ...) sont fournies à une pression de 1 bar, sauf indication contraire.

**Description détaillée**

De préférence, une poudre selon l'invention est formée par le seul mélange de particules réfractaires et de particules de liant activable à chaud.

Toutes les particules réfractaires utilisées selon la technique antérieure peuvent être envisagées, pour la matrice comme pour le granulat, pourvu que la poudre comporte plus de 40 % de particules ATZ, c'est-à-dire présentant la composition chimique suivante, en pourcentages massiques sur la base des oxydes :

- 10 % $\leq$ Al$_2$O$_3$ $\leq$ 55 %,
- 35 % $\leq$ TiO$_2$ $\leq$ 80 %,
- 1 % $\leq$ MgO+Cr$_2$O$_3$ $\leq$ 10 %,
- 8 % $\leq$ ZrO$_2$ $\leq$ 20 %,
- SiO$_2$ $\leq$ 8 %.

La présence de MgO et/ou Cr$_2$O$_3$ est nécessaire pour stabiliser la phase principale des particules ATZ. Au-delà de 10 %, le métal en fusion, et en particulier l'aluminium en fusion, risque de « coller » sur le produit. Ce phénomène est appelé « clogging » en anglais.

La présence de ZrO$_2$ dans les particules ATZ est nécessaire pour que le produit présente une tenue mécanique compatible avec les applications visées. Les inventeurs ont découvert que si les particules ATZ ne comportent pas au moins 8 % de zircone, la perte de tenue mécanique qui en résulte ne peut être compensée par un ajout de zircone indépendamment des particules ATZ.

La présence de SiO$_2$ dans les particules ATZ est limitée à 8 % pour éviter le risque de « collage » (clogging) susmentionné.

De préférence, pour limiter le risque de pollution du bain de métal en fusion, la teneur en Fe$_2$O$_3$ et/ou en oxydes alcalins K$_2$O + Na$_2$O, et/ou en CaO est inférieure ou égale à 1 %, voire inférieure à 0,5 %. De préférence ces oxydes sont des impuretés.

Le choix du liant activable à chaud doit s'effectuer notamment en fonction de la température de service. Plus précisément, ce liant doit être activable sous la température de service. A titre d'exemple, il n'est pas envisagé d'utiliser de la cryolithe comme liant activable à chaud pour une application dans laquelle la température de service serait inférieure à 950°C.

Le liant activable à chaud doit être également choisi de manière à présenter une température de fusion inférieure à celle des particules ATZ. Pendant le traitement thermique de consolidation, le liant activable à chaud peut ainsi passer de l'état solide à un état liquide visqueux permettant une adhésion aux particules ATZ et une liaison entre ces dernières.

Une poudre selon l'invention peut être fabriquée par mélange de matières premières présentant des granulométries et compositions adaptées.

Tous les moyens connus pour compacter une poudre selon l'invention sont possibles. De préférence, la distribution granulométrique d'une poudre selon l'invention est adaptée pour favoriser sa compaction. Des modèles de compaction comme le modèle de Fuller-Bolomey ou le modèle d'Andréasen peuvent être utilisés pour déterminer la distribution granulométrique la plus adaptée.

Exemples

Les matières premières suivantes ont été utilisées :
- des grains ATZ10 fondus présentant la composition chimique suivante, en pourcentages massique sur la base des oxydes :

Tableau 1

|  | ATZ 10 |
|---|---|
| Al$_2$O$_3$ | 33,6 |
| TiO$_2$ | 44,1 |
| ZrO$_2$ | 11,7 |
| MgO | 5,18 |

(suite)

|        | ATZ 10 |
|--------|--------|
| $SiO_2$ | 4,3 |
| $Fe_2O_3$ | 0,46 |
| $Na_2O$ | 0,14 |
| CaO | 0,06 |

- du corindon brun, présentant une teneur en albumine supérieure à 95 %, une teneur en silice inférieure à 1,2 %, une teneur en oxyde de titane inférieure à 3 %, une teneur en oxyde de fer inférieure à 0,25 %, et une densité sur grains supérieure à 3,85 g/cm$^3$;

- du corindon blanc présentant une teneur en alumine supérieure à 99,6 %, et une densité sur grains égale à 3,95 g/cm$^3$;

- de l'alumine calcinée AC44B6 présentant une teneur en alumine supérieure à 99 %, commercialisée par RIOTINTO ALCAN;

- de l'argile, présentant une teneur en alumine égale à 28 % sur produit sec, un percentile $D_{90}$ égal à 40 $\mu$m et une perte au feu mesurée après traitement thermique à 1000°C pendant 1 heure égale à 9 %,

- de l'acide borique, présentant un équivalent $H_3BO_3$ supérieur à 99,9 % et une taille médiane $D_{50}$ égale à 100 $\mu$m;

- du fluoroborate de potassium ($KBF_4$), contenant typiquement 96 % en masse de fluoroborate de potassium, et de taille inférieure à 100 $\mu$m.

Les différentes matières premières particulaires, y compris le liant activable à chaud, sont introduites dans un malaxeur, et mélangées à sec pendant 5 minutes.

Chaque poudre ainsi obtenue est introduite dans un malaxeur dans lequel on ajoute également 1 % de poudre de dextrine, ce pourcentage étant par rapport à la masse de ladite poudre. Après 5 minutes de mélange, on ajoute progressivement 3 % d'eau, en pourcentage par rapport à la masse de la poudre initiale (donc hors poudre de dextrine), sans arrêter le malaxeur. Après introduction de toute l'eau, le malaxage est poursuivi pendant 5 minutes.

L'ajout d'un liant temporaire comme la dextrine et de l'eau sont nécessaires pour la fabrication de petits échantillons, mais pas lors d'une application industrielle de la poudre pour former un revêtement d'un four.

Les mélanges humides sont alors versés dans des moules appropriés pour la fabrication des pièces suivantes :

- une brique consolidée de dimensions 230x114x60 mm$^3$ utilisée pour usiner des barreaux de dimensions 150 x 25 x 25 mm$^3$ ne comportant aucune face de peau et destinés aux caractérisations physico-mécaniques (masse volumique apparente, porosité ouverte, perte relative de résistance à la flexion suite à un choc thermique),
- un cylindre de diamètre 50 mm et de hauteur 60 mm percé en son centre d'un trou de diamètre 12 mm, destiné aux mesures de dilatation thermique,
- une brique consolidée de dimensions 230x114x60 mm$^3$ comportant 2 trous de diamètre 35 mm et profondeur 30 mm, destinée aux essais d'infiltration par les métaux en fusion.

A cet effet, le mélange humide versé dans les moules subit un pressage uniaxial, à une pression de 90 MPa. Les préformes ainsi obtenues sont démoulées puis séchées pendant 24 heures à 110°C.

Le cylindre destiné aux mesures de dilatation thermique n'est pas traité thermiquement.

Les briques sont consolidées dans le cycle thermique suivant :

- de 20°C à 950°C : montée à 150°C/h
- palier de 2 heures à 950°C
- descente à 150°C/h jusqu'à 20°C.

Caractérisation

Les fractions granulométriques des poudres sont déterminées par tamisage à sec pour les grades de $D_{10}$ > 45 $\mu$m et à l'aide d'un granulomètre laser HORIBA pour les grades de $D_{90}$ < 100 $\mu$m.

L'analyse chimique est déterminée par spectroscopie de fluorescence X pour les éléments dont la teneur est supérieure à 0,1 % massique. Si la teneur en un élément est inférieure à 0,1 % massique, elle est déterminée par ICP (Induction Coupled Plasma), sur un modèle Vista AX (commercialisé par la société Varian).

Les mesures de la masse volumique apparente et de la porosité ouverte après traitement thermique de consolidation sont effectuées selon la méthode suivante : les barreaux mentionnés ci-dessus sont d'abord pesés secs pour déterminer leur masse sèche Ms. Ils sont ensuite placés dans une cloche sous vide d'air pendant 30 minutes. On remplit ensuite la cloche d'eau, de manière à ce que les barreaux soient totalement immergés. Après immersion, on maintient le vide pendant 30 minutes. On rétablit ensuite la pression atmosphérique dans la cloche et on laisse reposer à nouveau pendant 30 minutes. Les échantillons sont ensuite soumis à une pesée hydrostatique, donnant une masse Mi. Ils sont ensuite essuyés avec un chiffon humide et on mesure leur masse humide Mh.

La masse volumique apparente est donnée par le rapport p.Ms/(Mh-Mi), en g/cm$^3$, avec p étant la masse volumique de l'eau, prise égale à 1 g/cm$^3$.

La porosité ouverte est donnée par la rapport 100(Mh-Ms)/(Mh-Mi), en %.

La résistance à l'infiltration par les métaux en fusion est déterminée en mettant la brique consolidée percée de deux trous en contact avec un métal en fusion. A cet effet, les trous sont remplis de copeaux d'un alliage aluminium-silicium référence 42220 selon la norme NF EN 1706. Le tout est ensuite porté à une température de 800°C pendant un temps de palier limité à 8 heures. Après refroidissement, on mesure la profondeur d'infiltration.

La perte relative de résistance à la flexion suite à un choc thermique permet d'évaluer la capacité d'un produit à subir un tel choc.

L'essai normalisé PRE III.26/PRE/R.5.1/78 est utilisé pour déterminer le comportement aux chocs thermiques par la perte relative de résistance à la flexion (% Perte MOR) après un cycle consistant à placer une éprouvette d'essai à une température de 600°C, à maintenir l'éprouvette à cette température pendant 1 heure, puis à plonger l'éprouvette dans de l'eau froide (20°C).

Les éprouvettes sont des barreaux tels que décrits ci-dessus étuvés à 110°C pendant 48 heures avant réalisation de l'essai.

La résistance à la flexion est mesurée suivant la norme ISO 5014, avec un entraxe de 125 mm. Pour une composition donnée, la mesure de la résistance à la flexion initiale des éprouvettes (non soumises à un choc thermique), ou « MOR initial », est la valeur moyenne mesurée sur 3 éprouvettes identiques ; la mesure de la résistance après le choc thermique à 600°C, « MOR après CT » est la valeur moyenne de la résistance à à flexion mesurée à température ambiante sur les 3 éprouvettes après qu'elles ont subi ledit choc thermique ; la mesure de la perte relative de résistance à la flexion, «% Perte MOR » est donnée par la formule suivante :

$$\% \text{ Perte MOR} = 100.(\text{MOR après CT} - \text{MOR initial}) / (\text{MOR initial})$$

La mesure du coefficient de dilatation thermique du tableau 2 est effectuée sur les cylindres non consolidés de diamètre 50 mm traversés d'un trou central de diamètre 12 mm, obtenus directement par pressage et séchés pendant 24 heures à 110°C. Cette mesure s'effectue selon la norme EN993-19. La mesure est réalisée entre 100 et 900 °C par un capteur LVDT de marque RDP modèle DCT 500A, avec un comparateur en alumine frittée dense.

Résultats

Le tableau 2 suivant résume les compositions des poudres fabriquées et les résultats obtenus.

Tableau 2

|  | Taille | **1** | **2** | **Réf.** |
|---|---|---|---|---|
| ATZ10 | > 1 mm | 33 | 36,5 |  |
| ATZ10 | 0,1 - 1 mm | 21 | 23 |  |
| ATZ10 | < 0,1 mm | 2 | 2,5 |  |
| *Total ATZ10* |  | *56* | *62* |  |
| Corindon brun | > 1 mm |  |  | 38,5 |
| Corindon brun | 0,1-1 mm | 15,5 | 13 | 36,5 |
| Corindon blanc | < 0,1 mm | 16,5 | 14 | 15 |
| Alumine calcinée | < 50 $\mu$m | 3,5 | 3 | 2 |
| Argile calcinée | < 150 $\mu$m | 5,5 | 5 | 5 |
| Acide borique |  | 2 | 2 | 2 |
| KBF$_4$ : fluoroborate de potassium |  | 1 | 1 | 1 |
|  |  |  |  |  |

(suite)

| | Taille | 1 | 2 | Réf. |
|---|---|---|---|---|
| Masse volumique apparente (g/cm$^3$) | | 2,96 | 2,96 | 3,02 |
| Porosité ouverte (%) | | 19,5 | 19,8 | 18,2 |
| % Perte MOR après 1 choc thermique à 600°C | | 0 | 19 | 43 |
| % Perte MOR après 2 chocs thermiques à 600°C | | 2 | 19 | 54 |
| Coefficient de dilatation thermique entre 100°C et 900°C (°C$^{-1}$) | | $5,7. 10^{-6}$ | $5,5. 10^{-6}$ | $8,5. 10^{-6}$ |
| Profondeur d'infiltration du métal (mm) | | 0 | | 0 |

Les inventeurs considèrent que les résultats sont particulièrement satisfaisants s'ils satisfont le compromis suivant :

(a) La profondeur d'infiltration du métal est inférieure ou égale à 1 mm, de préférence nulle ;
(b) La perte MOR suite au(x) choc(s) thermique(s) est inférieure ou égale à 30 %.

Par ailleurs, les inventeurs considèrent que, pour éviter la fissuration, il est indispensable que le coefficient de dilatation thermique du produit soit le plus faible possible, en restant positif.

Comme cela apparaît clairement à présent, l'invention fournit une poudre permettant de fabriquer des produits consolidés présentant une bonne résistance mécanique aux chocs thermiques, une bonne résistance à la fissuration et une bonne résistance à l'infiltration par les métaux en fusion.

Par ailleurs, d'autres essais ont montré qu'une poudre selon l'invention est facile à mettre en place, d'un coût faible et qu'elle conduit à un produit consolidé présentant une bonne inertie chimique vis-à-vis des métaux en fusion, capable de résister efficacement à la corrosion par ces métaux en fusion. Un produit consolidé selon l'invention est donc parfaitement adapté à une application à un four de fusion de métaux, en particulier dans un four à induction.

Bien entendu, l'invention n'est pas limitée aux modes de réalisation fournis à titre d'exemples.

## Revendications

1. Poudre comportant plus de 70 % de particules réfractaires, en pourcentage en masse par rapport à la masse de la poudre, une particule de ladite poudre étant classée dans la fraction appelée «matrice» ou dans la fraction appelée « granulat » selon qu'elle présente une taille inférieure ou égale à 100 $\mu$m, ou supérieure à 100 $\mu$m, respectivement, ladite poudre comportant, en pourcentages en masse par rapport à la masse de la poudre :

   - de 0,1 % à 18 % de particules d'un liant activable à chaud, présentant une température de fusion inférieure à 1300°C, dites « particules de liant activable à chaud », et
   - plus de 40 % de particules réfractaires, dites « particules ATZ », présentant la composition chimique suivante, en pourcentages massiques sur la base des oxydes desdites particules ATZ :

     - 10 % $\leq Al_2O_3 \leq$ 55 %,
     - 35 % $\leq TiO_2 \leq$ 80 %,
     - 1 % $\leq MgO+Cr_2O_3 \leq$ 10 %,
     - 8 % $\leq ZrO_2 \leq$ 20 %,
     - $SiO_2 \leq$ 8 %.

2. Poudre selon la revendication précédente, dans laquelle le liant activable à chaud est un liant inorganique et/ou au moins une résine.

3. Poudre selon l'une quelconque des revendications précédentes, comportant plus de 50 % de particules ATZ, et/ou plus de 1% dudit liant activable à chaud.

4. Poudre selon l'une quelconque des revendications précédentes, dans laquelle la composition des particules ATZ est telle que la teneur en $Al_2O_3$ est supérieure à 35 %, et/ou
   la teneur en $TiO_2$ est supérieure à 40 % et inférieure à 55 %, et/ou la teneur en $SiO_2$ est inférieure à 2 %, en pourcentages massiques sur la base des oxydes desdites particules ATZ, et/ou
dans laquelle la composition des particules ATZ est telle que

- la teneur en $MgO+Cr_2O_3$ est supérieure à 2 % et inférieure à 8 % ; et/ou
- la teneur en $Cr_2O_3$ est inférieure à 0,5 % ; et/ou
- la teneur en $ZrO_2$ est inférieure à 15 % ; et/ou
- la teneur en $SiO_2$ est inférieure à 5 % ; et/ou
- $Fe_2O_3 \leq 1$ %,

en pourcentages massiques sur la base des oxydes desdites particules ATZ.

5. Poudre selon l'une quelconque des revendications précédentes, dans laquelle les particules ATZ sont des particules fondues.

6. Poudre selon l'une quelconque des revendications précédentes, dans laquelle la matrice représente moins de 40 % de la masse de la poudre, et dans laquelle plus de 60 % des grains du granulat sont des particules ATZ, en pourcentages sur la base de la masse du granulat.

7. Poudre selon l'une quelconque des revendications précédentes, dans laquelle le liant activable à chaud est sélectionné dans le groupe formé par l'oxyde de bore, l'acide borique, les borates, la cryolithe, les sels de fluorure, les composés de silicate, les composés de phosphate, les feldspaths, les chlorures de magnésium, la colémanite, l'argile, le kaolin, la silice amorphe, en particulier la fumée de silice, les résines phénoliques, les résines furaniques, les frittes céramiques, et leurs mélanges.

8. Poudre selon l'une quelconque des revendications précédentes, dans laquelle les particules ATZ comportent

- une phase oxyde sous la forme d'une solution solide du type titanate d'aluminium comprenant

  - du titane,
  - de l'aluminium,
  - du fer,
  - du magnésium et/ou du chrome et
  - du zirconium,

ladite phase oxyde représentant au moins 60 % de la masse totale des oxydes des particules ATZ ; et/ou
- une phase silicatée minoritaire comportant plus de 40 % de silice, en pourcentage massique sur la base de ladite phase silicatée ; et/ou
- une phase minoritaire comportant plus de 80 % d'oxyde de titane $TiO_2$ et/ou d'oxyde de zirconium $ZrO_2$, en pourcentage massique sur la base de ladite phase minoritaire.

9. Poudre selon l'une quelconque des revendications précédentes, constituée de particules réfractaires, de particules de liant activable à chaud, optionnellement de particules d'agent anti-poussières, optionnellement de particules d'un agent anti-mouillant choisi parmi le carbure de silicium, le sulfate de baryum, les SiAlON, et les nitrures, et d'impuretés.

10. Poudre selon l'une quelconque des revendications précédentes, ne comportant ni liant hydraulique ni liant organique.

11. Poudre selon l'une quelconque des revendications précédentes, comportant

- entre 5 % et 15 % d'un agent anti-mouillant choisi parmi le carbure de silicium, les SiAlON, les nitrures, et/ou
- entre 0,1 % et 1 % d'un agent anti-poussières choisi dans le groupe formé par les huiles, en particulier les huiles minérales, le kérosène, les polymères organiques et leurs mélanges.

12. Poudre selon l'une quelconque des revendications précédentes, constituée pour plus de 95 % en pourcentage massique, de particules réfractaires, de particules de liant activable à chaud, optionnellement de particules d'agents anti-poussière et optionnellement de particules d'agent anti-mouillant, le complément à 100 % étant constitué d'impuretés.

13. Poudre selon l'une quelconque des revendications précédentes, le liant activable à chaud présentant une température de fusion comprise entre 150°C et 1200°C.

14. Produit obtenu par traitement thermique de consolidation :

- d'une poudre selon l'une quelconque des revendications précédentes ou
- d'un mélange comportant une poudre selon l'une quelconque des revendications précédentes et

- un liant temporaire en une quantité supérieure à 0,5 % et inférieure à 6 %, et/ou
- de l'eau en une quantité d'eau supérieure à 2 % et inférieure à 6 %,

en pourcentages en masse par rapport à la masse de la poudre avant addition du liant temporaire et de l'eau,

le liant activable à chaud formant une phase liante entre les particules réfractaires.

15. Four de fusion de métaux comportant au moins une région destinée à être en contact avec un métal en fusion, ladite région étant constituée en un produit consolidé selon la revendication précédente.

16. Four selon la revendication précédente, le liant activable à chaud étant choisi de manière à être sous un état visqueux lors de la première montée en température du four.

17. Procédé de fabrication d'un produit consolidé comportant les étapes successives suivantes :

a) préparation d'une charge de départ à partir d'une poudre selon l'une quelconque des revendications 1 à 13,

(1) la charge de départ comportant une phase liquide et une poudre selon l'une quelconque des revendications 1 à 13 , la phase liquide dans ladite charge de départ représentant moins de 3 % de la masse de la charge de départ ; ou
(2) la charge de départ étant constituée d'un mélange comportant une poudre selon l'une quelconque des revendications 1 à 13 et

- d'un liant temporaire en une quantité supérieure à 0,5 % et inférieure à 6 %, et/ou
- de l'eau en une quantité d'eau est supérieure à 2 % et inférieure à 6 %,

en pourcentages en masse par rapport à la masse de la poudre avant addition du liant temporaire et de l'eau,

b) mise en forme de ladite charge de départ par pressage, damage ou vibration;
c) traitement thermique de consolidation de la charge de départ mise en forme à une température supérieure à la température de fusion du liant activable à chaud.

**Patentansprüche**

1. Pulver mit mehr als 70% an Feuerfestteilchen, in Massenprozent im Verhältnis zur Masse des Pulvers, wobei ein Teilchen dieses Pulvers in die Fraktion genannt "Matrix" oder in die Fraktion genannt "Granulat" klassifiziert ist, je nachdem ob es eine Größe kleiner oder gleich 100 $\mu$m, oder größer als 100 $\mu$m aufweist, wobei das Pulver in Massenprozent im Verhältnis zur Masse des Pulvers enthält:

- von 0,1% bis 18% an Teilchen eines wärmeaktivierbaren Bindemittels, welches eine Schmelztemperatur kleiner als 1300°C aufweist, genannt "wärmeaktivierbare Bindemittelteilchen", und
- mehr als 40% an Feuerfestteilchen, genannt "ATZ-Teilchen", welche die folgende chemische Zusammensetzung in Massenprozent auf der Basis von Oxiden dieser ATZ-Teilchen aufweist:
- 10% $\leq Al_2O_3 \leq$ 55%,
- 35% $\leq TiO_2 \leq$ 80%,
- 1% $\leq MgO+Cr_2O_3 \leq$ 10%,
- 8% $\leq ZrO_2 \leq$ 20%,
- $SiO_2 \leq$ 8%.

2. Pulver nach dem vorhergehenden Anspruch, in dem das wärmeaktivierbare Bindemittel ein anorganisches Bindemittel ist und/oder wenigstens ein Harz.

3. Pulver nach einem der vorhergehenden Ansprüche, enthaltend mehr als 50% von ATZ-Teilchen, und/oder mehr als 1% des wärmeaktivierbaren Bindemittels.

4. Pulver nach einem der vorhergehenden Ansprüche, in welchem die Zusammensetzung der ATZ-Teilchen derart ist, dass der Gehalt an $Al_2O_3$ größer als 35% ist, und/oder
der Gehalt an $TiO_2$ größer als 40% und kleiner als 55% ist, und/oder der Gehalt an $SiO_2$ kleiner als 2% in Massenprozent auf der Basis von Oxiden der ATZ-Teilchen ist, und/oder
in welchem die Zusammensetzung der ATZ-Teilchen derart ist, dass

- der Gehalt an MgO+ $Cr_2O_3$ größer als 2% und kleiner als 8% ist; und/oder
- der Gehalt an $Cr_2O_3$ kleiner als 0,5% ist; und/oder
- der Gehalt an $ZrO_2$ kleiner als 15% ist; und/oder
- der Gehalt an $SiO_2$ kleiner als 5% ist; und/oder
- $Fe_2O_3 \leq 1\%$ ist in Massenprozent auf der Basis von Oxiden der ATZ-Teilchen.

5. Pulver nach einem der vorhergehenden Ansprüche, in welchem die ATZ-Teilchen geschmolzene Teilchen sind.

6. Pulver nach einem der vorhergehenden Ansprüche, in welchem die Matrix weniger als 40% der Pulvermasse darstellt, und in welchem mehr als 60% der Granulatkörner ATZ-Teilchen sind, und zwar in Prozent auf der Basis der Granulatmasse.

7. Pulver nach einem der vorhergehenden Ansprüche, in welchem das wärmeaktivierbare Bindemittel ausgewählt ist aus der Gruppe, die gebildet ist durch Boroxyd, Borsäure, Borate, Cryolit, Fluoridsalze, Silikatzusammensetzungen, Phospatzusammensetzungen, Feldspate, Magnesiumchloride, Colemanit, Ton, Kaolin, amorphes Siliciumdioxid, insbesondere Siliciumoxiddampf, phenolische Harze, Furanharze, keramische Emaille und ihre Mischungen.

8. Pulver nach einem der vorhergehenden Ansprüche, in welchem die ATZ-Teilchen aufweisen:

- eine Oxidphase in Form einer festen Lösung des Aluminiumtitanattyps mit
- Titan,
- Aluminium,
- Eisen,
- Magnesium und/oder Chrom und
- Zirkon,
wobei die Oxidphase weniger als 60% der totalen Masse der Oxide der ATZ-Teilchen aufweist; und/oder
- eine Minoritätssilikatphase mit mehr als 40% Siliciumdioxid, in Massenprozent auf der Basis der Silikatphase; und/oder
- eine Minoritätsphase mit mehr als 80% Titanoxid $TiO_2$ und/oder Zirkonoxid $ZrO_2$, in Massenprozent auf der Basis dieser Minoritätsphase.

9. Pulver nach einem der vorhergehenden Ansprüche, gebildet aus Feuerfestteilchen, wärmeaktivierbaren Bindemittelteilchen, optional Teilchen eines Antistaubmittels, optional Teilchen eines Antibenetzungsmittels, ausgesucht aus Siliciumcarbid, Bariumsulfat, SiAlON, und Nitride, und Verunreinigungen.

10. Pulver nach einem der vorhergehenden Ansprüche, welches weder hydraulische noch organische Bindemittel aufweist.

11. Pulver nach einem der vorhergehenden Ansprüche, welches aufweist

- zwischen 5% und 15% eines antibenetzenden Mittels ausgesucht aus Siliciumcarbid, SiAlON, Nitride, und/oder
- zwischen 0,1% und 1% eines Antistaubmittels, ausgewählt aus der Gruppe, die gebildet ist durch Öle, insbesondere Mineralöle, Kerosin, organische Polymere und ihre Mischungen.

12. Pulver nach einem der vorhergehenden Ansprüche, welches für mehr als 95% in Massenprozent aus Feuerfestteilchen, wärmeaktivierbaren Bindemittelteilchen, optional aus Antistaubmittelteilchen und optional aus Antibenetzungsmittelteilchen gebildet ist, wobei das Komplement zu 100% aus Verunreinigungen gebildet ist.

**13.** Pulver nach einem der vorhergehenden Ansprüche, bei dem das wärmeaktivierbare Bindemittel eine Schmelztemperatur zwischen 150°C und 1200°C aufweist.

**14.** Produkt, durch Konsodilationswärmebehandlung erhalten wird:

- aus einem Pulver gemäß einem der vorhergehenden Ansprüche oder
- aus einer Mischung, die ein Pulver gemäß einem der vorhergehenden Ansprüche enthält und
- einem temporären Bindemittel in einer Quantität größer als 0,5% und kleiner als 6%, und/oder
- aus Wasser mit einer Wassermenge größer als 2% oder kleiner als 6%,

in Massenprozent im Verhältnis zur Masse des Pulvers vor der Zugabe von temporärem Bindemittel und Wasser, wobei das wärmeaktivierbare Bindemittel eine bindende Phase zwischen den Feuerfestteilchen bildet.

**15.** Metallschmelzofen mit mindestens einem Bereich, der bestimmt ist, in Kontakt mit dem zu schmelzenden Metall zu sein, wobei dieser Bereich aus einem Produkt gebildet ist, welches nach dem vorhergehenden Anspruch konsolidiert ist.

**16.** Ofen nach dem vorhergehenden Anspruch, wobei das wärmeaktivierbare Bindemittel derart ausgesucht ist, dass es in einem viskosen Zustand zum Zeitpunkt des ersten Temperaturanstiegs des Ofens ist.

**17.** Herstellungsverfahren eines konsolidierten Produkts mit den folgenden aufeinanderfolgenden Schritten:

a) Zubereitung einer Ausgangscharge ausgehend von einem Pulver nach einem der Ansprüche 1 bis 13,

(1) wobei die Ausgangscharge eine flüssige Phase und ein Pulver nach einem der Ansprüche 1 bis 13 aufweist und die Flüssigphase in der Ausgangscharge weniger als 3% der Ausgangschargenmasse aufweist; oder
(2) die Ausgangscharge aus einer Mischung gebildet ist, die aus einem Pulver nach einem der Ansprüche 1 bis 13 besteht und

- einem temporären Bindemittel in einer Menge größer als 0,5% und kleiner als 6%, und/oder
- aus Wasser einer Wassermenge von mehr als 2% und kleiner als 6%, in Massenprozenten im Verhältnis zur Masse des Pulvers vor der Hinzufügung des temporären Bindemittels und des Wassers,

b) Formen der Ausgangscharge durch Pressen, Stampfen oder Vibration;
c) thermische Konsolidationsbehandlung der geformten Ausgangscharge bei einer Temperatur größer als der Schmelztemperatur des wärmeaktivierbaren Bindemittels.

## Claims

**1.** A powder comprising more than 70% of refractory particles, as a percentage by weight in relation to the weight of the powder, a particle of said powder being classified in the "matrix" fraction or in the "aggregate" fraction depending on whether it has a size less than or equal to 100 $\mu$m, or greater than 100 $\mu$m, respectively, said powder comprising, in percentages by weight in relation to the weight of the powder:

- from 0.1% to 18% of particles of a heat-activatable binder, having a melting temperature of less than 1300°C, referred to as "heat-activatable binder particles", and
- more than 40% of refractory particles, referred to a "ATZ particles", having the following chemical composition, in percentages by weight on the basis of the oxides of said ATZ particles:

- 10 % $\leq$ Al$_2$O$_3$ $\leq$ 55 %,
- 35 % $\leq$ TiO$_2$ $\leq$ 80 %,
- 1 % $\leq$ MgO+Cr$_2$O$_3$ $\leq$ 10 %,
- 8 % $\leq$ ZrO$_2$ $\leq$ 20 %,
- SiO$_2$ $\leq$ 8 %.

**2.** The powder as claimed in the preceding claim, wherein the heat-activatable binder is an inorganic binder and/or at least one resin.

3. The powder as claimed in either one of the preceding claims, comprising more than 50% of ATZ particles, and/or more than 1% of said heat-activatable binder.

4. The powder as claimed in any one of the preceding claims, wherein the composition of the ATZ particles is such that the content of $Al_2O_3$ is greater than 35%, as weight percentages on the basis of the oxides of said ATZ particles and/or

the content of $TiO_2$ is greater than 40% and less than 55%, and/or the content of $SiO_2$ is less than 2%, as weight percentages on the basis of the oxides of said ATZ particles, and/or
wherein the composition of the ATZ particles is such that:

   - the content of $MgO+Cr_2O_3$ is greater than 2% and less than 8%; and/or
   - the content of $Cr_2O_3$ is less than 0.5%; and/or
   - the content of $ZrO_2$ is less than 15%; and/or
   - the content of $SiO_2$ is less than 5%; and/or
   - $Fe_2O_3 \leq 1\%$,

as weight percentages on the basis of the oxides of said ATZ particles.

5. The powder as claimed in any one of the preceding claims, wherein the ATZ particles are fused particles.

6. The powder as claimed in any one of the preceding claims, wherein the matrix represents less than 40% of the weight of the powder, and wherein more than 60% of the grains of the aggregate are ATZ particles, as percentages on the basis of the weight of the aggregate.

7. The powder as claimed in any one of the preceding claims, wherein the heat-activatable binder is selected from the group formed by boron oxide, boric acid, borates, cryolite, fluoride salts, silicate compounds, phosphate compounds, feldspars, magnesium chlorides, colemanite, clay, kaolin, amorphous silica, in particular fumed silica, phenolic resins, furan resins, ceramic frits, and mixtures thereof.

8. The powder as claimed in any one of the preceding claims, wherein the ATZ particles comprise:

   - an oxide phase in the form of a solid solution of aluminum titanate type comprising:

      - titanium,
      - aluminum,
      - iron,
      - magnesium and/or chromium, and
      - zirconium,

   said oxide phase representing at least 60% of the total weight of the oxides of the ATZ particles; and/or
   - a minor silicate phase comprising more than 40% of silica, as a weight percentage on the basis of said silicate phase; and/or
   - a minor phase comprising more than 80% of titanium oxide $TiO_2$ and/or of zirconium oxide $ZrO_2$, as a weight percentage on the basis of said minor phase.

9. The powder as claimed in any one of the preceding claims, consisting of refractory particles, heat-activatable binder particles, optionally anti-dust agent particles, optionally particles of an anti-wetting agent chosen from silicon carbide, barium sulfate, SiAlON, and nitrides, and impurities.

10. The powder as claimed in any one of the preceding claims, comprising neither hydraulic binder nor organic binder.

11. The powder as claimed in any one of the preceding claims, comprising

   - between 5% and 15% of an anti-wetting agent chosen from silicon carbide, SiAlON, nitrides, and/or
   - between 0.1% and 1% of an anti-dust agent chosen from the group formed by oils, in particular mineral oils, kerosene, organic polymers and mixtures thereof.

**12.** The powder as claimed in any one of the preceding claims, more than 95% as a percentage by weight constituted of refractory particles, of heat-activatable binder particles, optionally of anti-dust agent particles and optionally of anti-wetting agent particles, the balance to 100% being constituted by impurities.

**13.** The powder as claimed in any one of the preceding claims, the heat-activable binder having a melting temperature ranging between 150°C and 1200°C.

**14.** A product obtained by consolidation heat treatment:

> - of a powder according to any one of the preceding claims or
> - of a mix comprising a powder as claimed in any one of the preceding claims, and

> > - a temporary binder in an amount of greater than 0.5% and less than 6%, and/or
> > - water in an amount of water of greater than 2% and less than 6%,

> in percentages by weight relative to the weight of the powder before addition of the temporary binder and water,

> the heat-activatable binder forming a binder phase between the refractory particles.

**15.** A furnace for melting metals comprising at least one region intended to be in contact with a metal being melted, said region being constituted of a consolidated product as claimed in the preceding claim.

**16.** The furnace as claimed in the preceding claim, the heat-activatable binder being chosen so as to be in a viscous state during the first temperature rise in the furnace.

**17.** A process for manufacturing a consolidated product, comprising the following successive steps:

> a) preparation of a feedstock from a powder as claimed in any one of claims 1 to 13,

> > (1) the feedstock comprising a liquid phase and a powder as claimed in any one of claims 1 to 13, the liquid phase in said feedstock representing less than 3% of the weight of the feedstock; or
> > (2) the feedstock being constituted of a mixture comprising a powder as claimed in any one of claims 1 to 13 and

> > > - a temporary binder in an amount of greater than 0.5% and less than 6%, and/or
> > > - water in an amount of water of greater than 2% and less than 6%,

> > in percentages by weight relative to the weight of the powder before addition of the temporary binder and water,

> b) forming said feedstock by pressing, ramming or vibration;
> c) consolidation heat treatment of the formed feedstock at a temperature above the melting point of the heat-activatable binder.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1224153 A
- JP 3183656 B
- US 4430440 A
- FR 0854582